# EUROPEAN PATENT APPLICATION

(11) **EP 2 330 508 A1**
(43) Date of publication of application: **08.06.2011**
(21) Application number: 09816014.6
(22) Date of filing: 21.08.2009
(51) Int. Cl.: G06F 11/00, G06F 13/00

(54) **FIRMWARE UPDATE SYSTEM, UPDATE IMAGE GENERATION/DISTRIBUTION SERVER DEVICE**

(30) Priority: 24.09.2008 JP 2008244731
(71) Applicant: Hitachi Solutions, Ltd., Tokyo 140-0002 (JP)
(72) Inventor: NAKAMURA Yuichi, Tokyo 140-0002 (JP); OHAMA Nobuyuki, Tokyo 140-0002 (JP)
(74) Representative: Liesegang, Eva
(86) International application number: PCT/JP2009/064605
(87) International publication number: WO 2010/035597

(57) **Abstract**

There is provided a high-speed firmware update method which reduces the burden on a firmware developer. A server is installed which is provided with a function of receiving an image of new-version firmware (a new firmware image), comparing it with an image of old-version firmware (an old firmware image), taking out only updated files, and creating a procedure for updating the old firmware image to the new firmware image and an update image configured by update data.

## Description

### Technical Field

The present invention relates to a firmware update system and an update image generation/distribution server apparatus.

### Background Art

There has been commonly performed a method in which, when any fault is found in software after an integrated apparatus is released, the problem is resolved by rewriting conventional firmware with firmware for which the fault has been cleared. Examples of documents about such firmware update include, for example. Patent Document 1 and Patent Document 2 below. Here, the firmware is assumed to refer to all data that is stored in a nonvolatile storage area of an integrated apparatus in advance.

Patent Document 1 describes a firmware update method in which all firmware is replaced. Non-Patent Document 1 discloses a software update program, which is often used in Linux, and which manages software in packages and distributes an updated software package.
Patent Document 1: JP Patent Publication (Kokai) No. 11-110218
Non-Patent Document 1: Yum: Yellow dog Updater, Modified: http://linux.duke.edu/projects/yum/

### Disclosure of the Invention

### Problems to be Solved by the Invention

However, in the method as shown in Patent Document 1, much time is required for replacement of firmware because all the firmware is replaced. In the method as in Non-Patent Document 1, though all firmware is not replaced, it is troublesome for a firmware developer to manage software in packages.

The present invention has been made in view of the above situation and realizes such firmware replacement that the time required for replacing firmware is short, and the burden on a firmware developer is not heavy.

### Means for Solving the Problems

In order to solve the above problems, a server is installed which is provided with a function of receiving an image of new-version firmware (a new firmware image), comparing it with an image of old-version firmware (an old firmware image), taking out only updated files, and creating a procedure for updating the old firmware image to the new firmware image and an update image configured by update data. There is provided a section which caches only such update images that are frequently accessed in order to reduce the number of update images required by the above function. An integrated apparatus is provided with a function of version-upgrading an old firmware image on the apparatus to a new firmware image in accordance with an update procedure in an update image. It may be required to reactivate a service after an old firmware image is updated to a new firmware image. There is prepared a DB (a reactivation DB) for showing which file update requires which service reactivation so that a service reactivation instruction can be inserted into an update procedure in an update image. Furthermore, there is also provided a section for automating creation of the reactivation DB to reduce the burden on a firmware developer.

That is, the firmware update system according to the present invention is a firmware update system which updates the image of firmware including software for an apparatus and the configuration data thereof, the system comprising an apparatus which operates on the firmware, and an update image generation/distribution server which generates an update image for updating the firmware and transmits the update image to the apparatus. Here, the update image generation/distribution server comprises an update image generation section which generates an update image which is data required for updating a firmware image of the version being used by the apparatus (a first firmware image) to a firmware image of a new version (a second firmware image), and a data communication section which transmits the update image to the apparatus; and the apparatus updates the old-version firmware image on the basis of the update image.

The update image generation/distribution server further comprises an update image storage section which stores update images each of which is for two consecutive versions, which are update images each of which is for two consecutive versions between the oldest-version firmware image and the newest-version firmware image; and the update image generation section acquires data required for updating the first firmware image to the second firmware image, from the update image storage section to generate the update image, If an update image for two consecutive versions directly corresponding to update from the first firmware image to the second firmware image exists in the update image storage section, the update image generation section sets the update image for the two consecutive versions as the update image. On the other hand, if the update image for the two consecutive versions directly corresponding to update from the first firmware image to the second firmware image does not exist in the update image storage section, the update image generation section generates the update image by acquiring and merging all of update images each of which is for two consecutive versions and which are required for updating the first firmware image to the second firmware image.

The update image generation/distribution server further comprises an update image cache section which stores a predetermined number of update images with high use frequency. In this case, when having generated the newest update image, the update image generation section replaces the lowest update image in the update image cache section with the newest update image.

The update image generation/distribution server further comprises a reactivation instruction DB which stores information indicating which file update requires which service reactivation; and the update image generation section refers to the reactivation instruction DB to insert a service reactivation instruction into the update image to be transmitted. Furthermore, the reactivation instruction DB stores information indicating necessity of service reactivation in association with a library used by the file; and the update image generation section further inserts an instruction to reactivate a service corresponding to the library, into the update image to be transmitted.

Further features of the present invention will be apparent from Best Mode for Carrying Out the Invention below and accompanying drawings.

### Advantages of the Invention

According to the present invention, it is possible to realize such firmware replacement that the time required for replacing firmware is shortened and the burden on a firmware developer is reduced.

### Brief Description of the Drawings

Figure 1 is a diagram showing the whole schematic configuration of a firmware update system according to an embodiment of the present invention.
Figure 2 is a diagram showing the internal data configuration of an HDD of an update image generation/distribution server.
Figure 3 is a diagram showing the internal data configuration of a memory of an apparatus.
Figure 4 is a diagram showing a configuration example of a firmware image.
Figure 5 is a diagram showing a configuration example of an update image.
Figure 6 is a diagram showing a configuration example of a reactivation instruction DB.
Figure 7 is a diagram showing a configuration example of an update image cache.
Figure 8 is a diagram showing a configuration example of service name/filename correspondence data.
Figure 9 is a flowchart for describing a processing operation of an update creation function.
Figure 10 is a flowchart for describing a processing operation of a reactivation instruction creation function.
Figure 11 is a flowchart for describing a processing operation of an update distribution function.
Figure 12 is a flowchart for describing a processing operation of an update application program.

### Best Mode for Carrying Out the Invention

An embodiment of the present invention will be described below with reference to accompanying drawings. However, it should be noted that this embodiment is only an example for realizing the present invention and does not limit the technical scope of the present invention. Components common to the figures are given the same reference numerals.

An embodiment of the present invention will be described below with reference to the drawings.

### <Configuration of firmware update system>

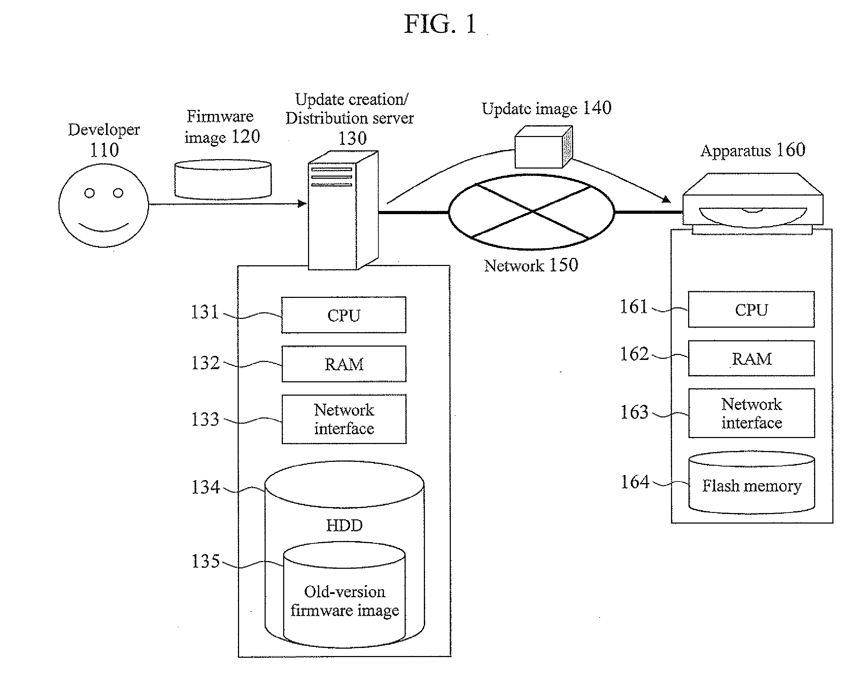

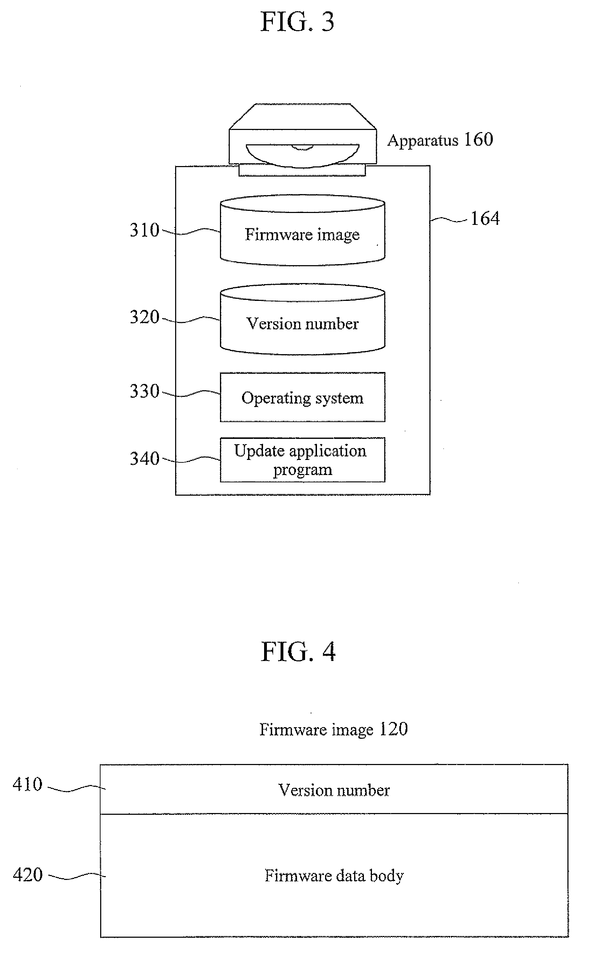

Figure 1 is a diagram showing the schematic configuration of a firmware update system according to the embodiment of the present invention. As shown in Figure 1, a developer 110 develops software for an apparatus 160 and integrates the developed software and a configuration file into a firmware image 120. The firmware image 120 is obtained by archiving the software developed by the developer 110 and the configuration file as one file (see Figure 4 for its detailed configuration). Then, when it is necessary to update the software for the apparatus 160, the developer 110 transmits the firmware image 120 to an update creation/distribution server 130 using his own computer (not shown).

The update creation/distribution server 130 is provided with hardware as a computer provided with a network function. That is, the update creation/distribution server 130 is provided with a CPU 131 which executes various control processes, a RAM 132, a network interface 133, and an HDD 134 which stores various data, parameters, programs and the like.

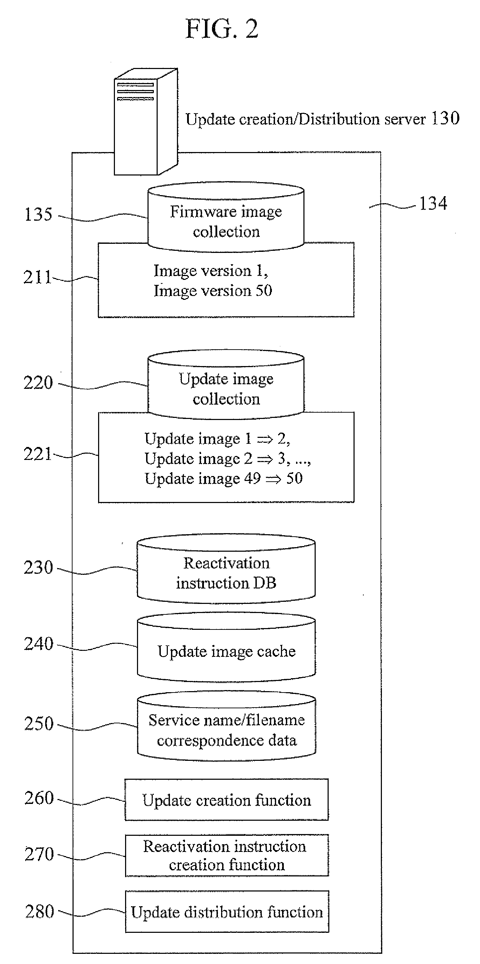

Old-version firmware images 135 are stored in the HDD 134. The update creation/distribution server 134 (CPU 131) compares the new firmware image 120 developed by the developer with the old-version firmware images 135, takes out only parts that have been updated, creates an update image 140, and transmits the update image 140 to the apparatus 160 via a network 150. The detailed configuration of the update image 140 is as shown in Figure 2, and it will be described later.

The apparatus 160 is provided with hardware as a computer provided with a network function. Examples of this apparatus 160 include an Internet appliance (TV), a broadband router and the like. The minimum components to be provided for the apparatus 160 are a CPU 161, a RAM 162, a network interface 163 and a flash memory 164. When the firmware is updated, the apparatus 160 transmits a software update request to the update creation/distribution server 130, receives an update image 160, and updates the firmware stored in the flash memory 164. Such a pull-type configuration is possible, and a push-type configuration is also possible in which an update image is transmitted from the update creation/distribution server 130 to each apparatus 160 as appropriate. In the case of the push-type configuration, it is necessary that the address of the apparatus 160 is registered in advance.

### <Internal configuration of HDD 134 of update creation/distribution server>

Figure 2 is a diagram showing the composition of data and programs stored inside the HDD 134 of the update creation/distribution server 130 in this embodiment. The HDD 134 includes a firmware image collection 135, an update image collection 220, a reactivation instruction DB 230, update image cache data 240, service name/filename correspondence data 250, an update creation function program 260, a reactivation instruction creation function program 270 and an update distribution function program 280.

The firmware image collection 135 includes old-version firmware images, and two kinds of firmware images, that is, the oldest-version firmware image and the newest-version firmware image, among firmware images the developer 110 transmitted in the past, are stored therein. The example of image versions 211 shows that firmware images of a version 1 and the newest version 50 are stored.

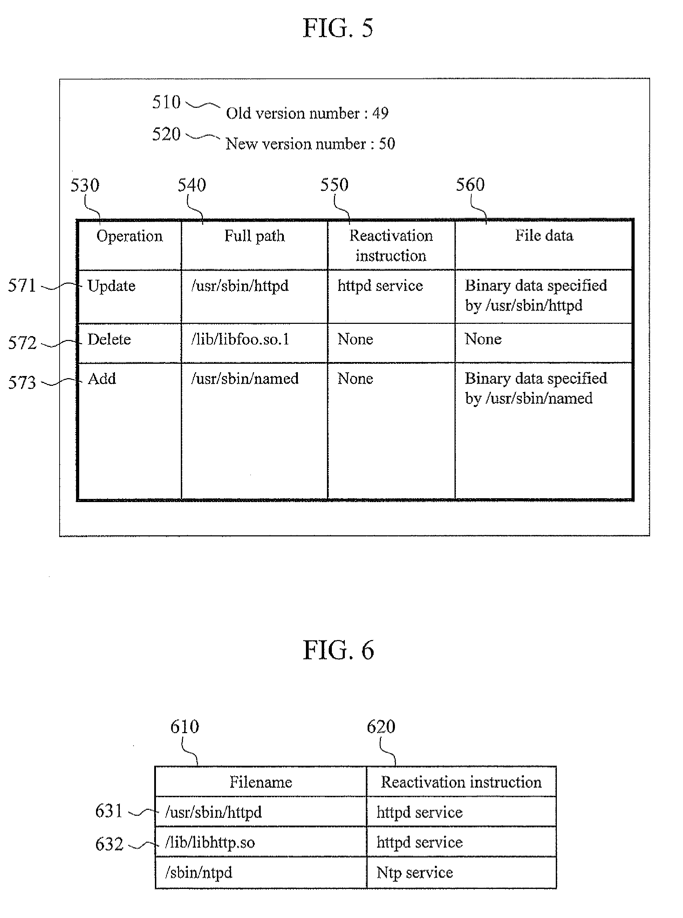

In the update image collection 220, update is stored for each of versions, from the oldest firmware image to the newest firmware image. That is, if the newest version is 50, then there are stored: "an update image indicating update from the firmware image version 1 to a firmware image version 2 (expressed as update image 1 ⇒ 2), "update image 2 ⇒ 3", "update image 3 ⇒ 4", "update image 4 ⇒ 5", ..., "update image 49 ⇒ 50". Cases other than the case of increment by one, such as update image 2 ⇒ 5, are basically not stored, except for exceptional cases such as the case where the image is frequently used. The configuration of the update image is such as shown in Figure 5.

The reactivation instruction DB 230 stores data to be used by the CPU 131 to execute the reactivation instruction creation function (program) 270. The detailed data configuration is shown in Figure 6.

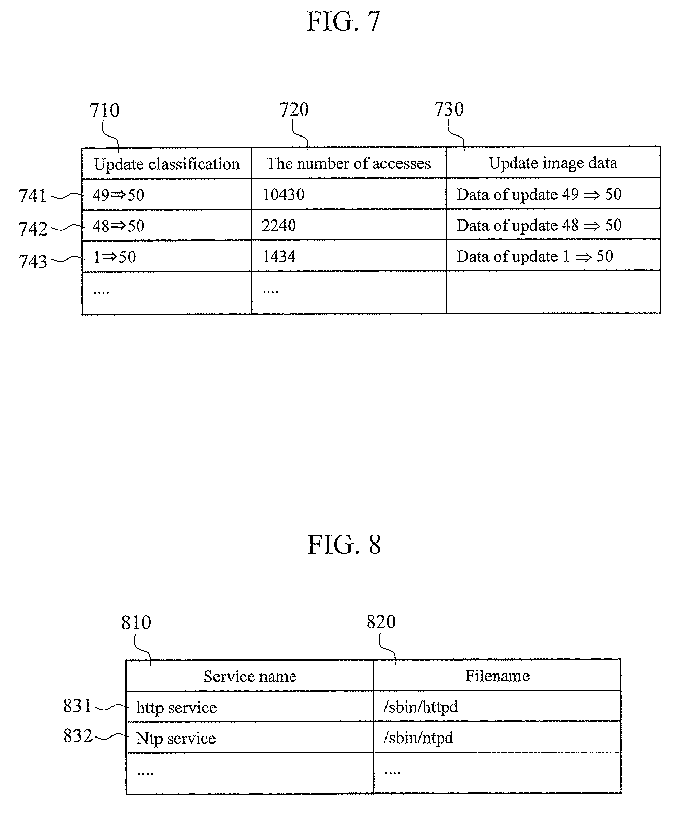

In the update image cache data 240, the frequencies of access to update images 221 and data of update images (for example, data of the top-ten update images with the highest access frequency) are recorded. The detailed configuration is as shown in Figure 7.

The service name/filename correspondence data 250 is information indicating pairs of a service name and a corresponding executable filename. The detailed configuration is as shown in Figure 8.

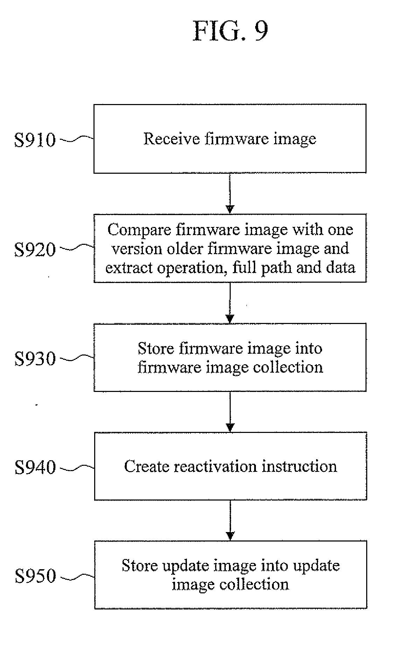

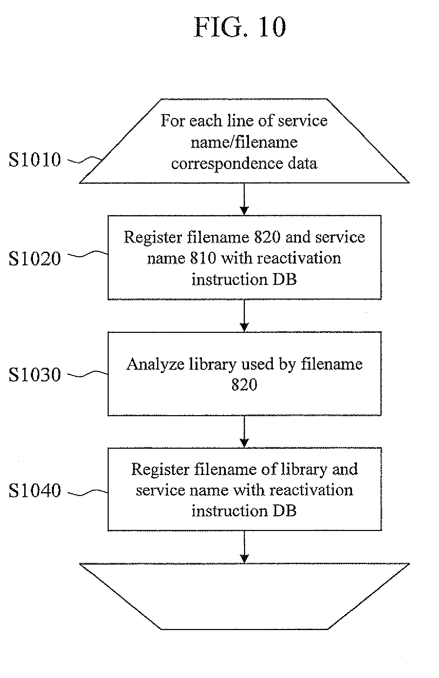

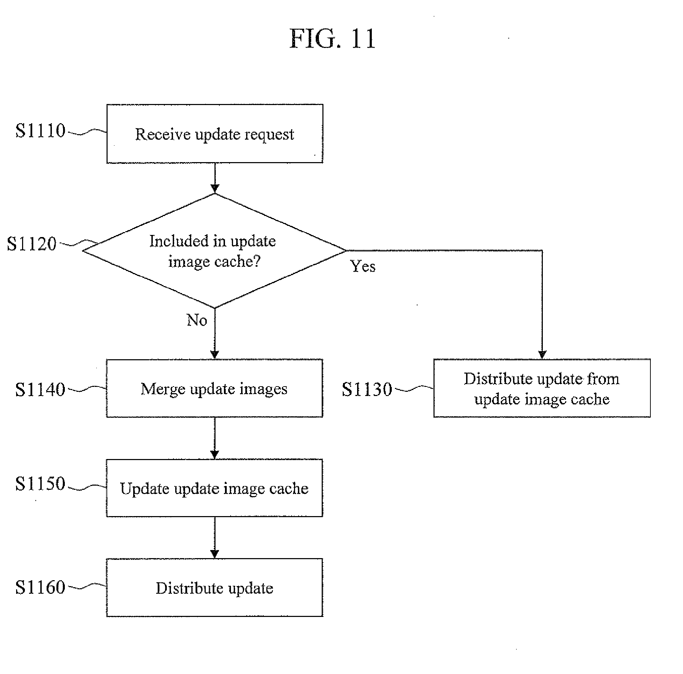

The update creation function program 260 is a program for creating the update image 140. The details of the function will be described later with the use of Figure 9. The reactivation instruction creation function program 270 is a program for creating the reactivation instruction DB 230. The details of the function will be described later with the use of Figure 10. The update distribution function program 280 is a program for distributing an update image stored in the update image collection 220 in response to a request from the apparatus 160. The details of the function will be described later with the use of Figure 11. These programs are executed by the CPU 131 to realize the functions, respectively.

### <Internal configuration of flash memory 164 of apparatus>

Figure 3 is a diagram showing the composition of data, programs and the like stored in the flash memory 164 of the apparatus 160 in this embodiment. The flash memory 164 stores a firmware image 310 being used by the apparatus 160, a version number 320, an operating system 330 and an update application program 340.

The firmware image 310 is image data in which software that operates on the apparatus and a set of configuration files are stored. The version number 320 indicates the version of the firmware image 310.

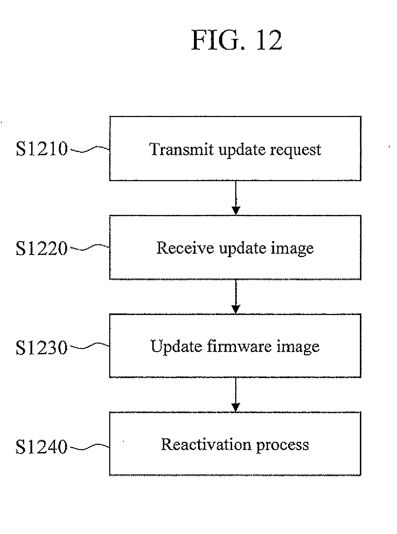

The operating system 330 is provided with a function for executing the software stored in the firmware image 310. The update application program 340 is a program which is provided with a function of receiving the update image 140 from the update creation/distribution server 130 and applying the update described in the update image 140 to the firmware image 310 and which is executed by the CPU 161. The details of the process of the function will be described later with the use of Figure 12.

### <Configuration of firmware image>

Figure 4 is a diagram showing the configuration of the firmware image 120 according to this embodiment. As shown in Figure 4, the firmware image 120 is constituted by a version number 410 and a firmware data body 420.

The version number 410 indicates the version of the firmware image 120. The version number is the version number of the firmware image 120 managed by the developer 110. The firmware data body 420 is generated, for example, by archiving a file system structure using tar, which is widely used in UNIX (registered trademark) operating system.

### <Configuration of update image>

Figure 5 is a diagram showing the configuration of the update image 140 in this embodiment. In the update image 140, reference numeral 510 indicates the version number of an image before update. Reference numeral 520 indicates the version number of an image after update. For example, if the version number 510 is "49" and the version number 520 is "50", it indicates the update is update from a version 49 of the firmware image to a version 50.

What are indicated by reference numerals 530 to 560 show an update procedure. The reference numeral 530 indicates an update operation. The reference numeral 540 indicates the full path of an operation target file. The reference numeral 550 indicates a reactivation instruction in the case of relevant update being performed. The reference numeral 560 indicates file data corresponding to a full path 540. For example, a line 571 indicates an update procedure for "performing rewriting for filename/usr/sbin/httpd with file data 560 and then reactivating http service".

That is, Figure 5 shows what processing procedure has been performed to update the firmware image of the version number 49 to the firmware image of the version number 50. For all the pairs of firmware images of two consecutive versions, such update images are stored in the HDD 134 of the update creation/distribution server 130 as the update image collection 220.

### <Configuration of reactivation instruction DB>

Figure 6 is a diagram showing the configuration of the reactivation instruction DB 230 in this embodiment. As shown in Figure 6, the reactivation instruction DB 230 stores correspondences between filenames 610 and reactivation instructions 620. That is, if a file indicated by a filename 610 is updated, reactivation of the service indicated by a corresponding reactivation instruction 620 is required.

The data of the reactivation instruction DB 230 is generated on the basis of the service name/filename correspondence data 250 (Figure 8) to be described later.

### <Configuration of update image cache>

Figure 7 is a diagram showing the configuration of the update image cache data 240 in this embodiment. The update image cache data is constituted by an update classification 710, the number of accesses 720 and update image data 730.

The update classification 710 indicates a requested update version. For example, "49 ⇒ 50" indicates a request for update from the version 49 to the version 50. The number of accesses 720 indicates the frequency at which the update classification 710 is requested. Reference numeral 730 indicates update image data. The format of the update image data 730 is as shown in Figure 5. Only such data 730 that the number of accesses 720 is large is stored in the update image cache data. For example, only the top ten kinds of data 730 are stored.

### <Service name/filename correspondence data>

Figure 8 is a diagram showing the configuration of the service name/filename correspondence data 250 in this embodiment. This correspondence data is prepared, for example, by the apparatus manufacturer in advance.

The service name/filename correspondence data is constituted by pairs of a service name 810 and an executable filename 820 of an executable file which realizes the service name 810. For example, a line 831 indicates that the name of an executable file which realizes an http service is /sbin/httpd. Depending on the system configuration of the apparatus, this can be automatically prepared.

In a lot of Linux systems, an activation script is prepared for each service name. For example, /etc/init.d/httpd is an activation script for an httpd service. This activation script is analyzed, and an executable file included therein is registered with the service name/filename correspondence data 250. For example, when /etc/init.d/httpd is analyzed, and /sbin/httpd is found to be included, then httpd service is registered as a service name 810, and /sbin/httpd is registered as a file name 820.

### <Update creation function>

Figure 9 is a flowchart for describing the process of the update creation function program 260. Data created by the process in Figure 9 is the update image shown in Figure 5. The subject of the operation of each step is the CPU 131 unless otherwise specified. That is, the CPU 131 develops the update creation function program 260 in the RAM 132 and executes each step in the program.

When receiving a firmware image 120 acquired from the developer 110 via the network interface 133 (step S910), the CPU 13 compares the firmware image just acquired (new version) and a one version older firmware image, and extracts the kind of operation, a full path (file path) and data of the file (step S920). More specifically, a firmware image (referred to as an old firmware image) which is one version older than the firmware image (referred to as a new firmware image) received at step S910 is stored in the firmware image collection 135. For example, if the version 50 is received at step S910, then the version of the old firmware image is 49. Then, the CPU 131 embeds the old version number 510 and the new version number 520 in the update image (Figure 5). For example, if the version of the firmware, image received at step 910 is 50, then the old version number 510 is "49", and the new version number 520 is "50". Next, the CPU 131 compares the file system structures of the new firmware image and the old firmware image and takes out an update file, a deleted file and an added file. Then, the columns for operation 530, full path 540 and file data 560 in the update image are filled (Figure 5). For example, if the data of /usr/sbin/httpd is updated in the new firmware image, "update", "/usr/sbin/httpd", and the data of /usr/sbin/httpd included in the new firmware image are stored as an operation 530, a full path 540 and file data 560, respectively.

Next, the CPU 131 deletes the newest-version firmware image in the firmware image collection 135 and, instead, stores the firmware image 120 received at step S910 as the newest version (step S930).

The CPU 131 refers to the reactivation instruction DB 230 to find a reactivation instruction 620 corresponding to the full path 540, and fills the column for reactivation instruction 550 in the update image (step S940). For example, if the full path 540 is "/usr/sbin/httpd", then the line to which the filename 610 corresponds is a line 631. Since the reactivation instruction on the line 631 shows "httpd service", "httpd service" is recorded as a reactivation instruction 550. If a corresponding reactivation instruction 620 is not found in the reactivation instruction DB 230, then "none" is stored as a reactivation instruction 550.

Furthermore, the CPU 131 stores the created update image into the update image collection 220 (step S950).

### <Reactivation instruction creation function>

Figure 10 is a flowchart for describing the process of the reactivation instruction creation function 270. Data created by the process in Figure 10 is the data shown in Figure 6. Again, the subject of the operation of each step is the CPU 131 unless otherwise specified. That is, the CPU 131 develops the reactivation instruction creation function program 270 in the RAM 132 and executes each step in the program. For each line of the service name/filename correspondence data 250 (see Figure 8), the processing at steps S1020 to step S 1040 is executed.

First, the CPU 131 refers to the service name/filename correspondence data 250 in Figure 8 and registers the filename 820 and the service name 810 on a corresponding line (831, 832, ..., or the like) as a filename 610 and a reactivation instruction 620 in the reactivation instruction DB 230 (step S1020).

Next, the CPU 131 analyzes a shared library used by the filenames 820 (step S1030). From the contents (binary) of a filename, a dependence relationship about which library is used is known. That is, a related library is searched at this step. For example, when the filename is /usr/sbin/httpd, the binary of httpd is analyzed to take out the name of a shared library used. For example, it is assumed that the name of a share library, libhttpd.so is taken out from the binary of httpd. The full path of libhttpd.so is taken out from the search path of the shared library. If the search path of the shared library is /lib, then the full path is /lib/libhttpd.so.

Then, the CPU 131 registers the full path of the library obtained at step S1030 as a filename 610 in the reactivation instruction DB 230, and registers the service name registered at step S1020 as a reactivation instruction 620 (step S1040). Since the library known to be used, at step S1030 is also involved in the service in association with the filename, the filename of the library and the service name are registered so that the library and the service are targeted by reactivation. In the example of step S1030, "/lib/libhttpd.so" is registered as a filename 610, and "httpd service" is registered as a reactivation instruction 620.

### <Update distribution function>

Figure 11 is a flowchart for describing the process of the update distribution function 280 in this embodiment. Again, the subject of the operation of each step is the CPU 131 unless otherwise specified. That is, the CPU 131 develops the update distribution function program 280 in the RAM 132 and executes each step in the program. The following steps will be described on the assumption that the version of the newest firmware image stored in the firmware image collection 135 is "50".

First, the CPU 131 receives an update request from the apparatus 160 via the network interface 133 (step S1110). The update request includes the version number 320 of a firmware image. Here, description will be made on a pull type as an example. However, push-type update distribution is also possible.

Next, the CPU 131 refers to the update classification 710 in the update image cache and judges whether the requested update is included in the update image cache (step S1120). In the example in Figure 7, if the version number received at step S1110 is "48", then the version of the firmware image of the apparatus is 48, and update to the newest version 50 is included in the update image cache as shown on a line 742.

If it is judged at step S1120 that the requested update is included in the update image cache, then the CPU 131 distributes a corresponding update image 730 in the update image cache to the apparatus 160 (step S1130). If the version number received at step S1110 is "48", the update image 730 corresponding to the line 742 is distributed. At the same time, the corresponding number of accesses 720 in the update image cache is incremented.

On the other hand, if the update image of the requested version is not included in the update image cache, at step S1120, then the process proceeds to step S1140. For example, in the example in Figure 7, the version number received at step S1110 is "47", a corresponding update image is not included in the update image cache. Then, the CPU 131 merges update images included in the update image collection 220 to generate a necessary update image (step S1140).

The procedure for this merge processing will be described on the assumption that the version number received at step S1110 is "47". By merging "update image 47 ⇒ 48", "update image 48 ⇒ 49" and "update image 49 ⇒ 50" included in the update image collection 220, "update image 47 ⇒ 50" is created. Specifically, lines including sets of operation 530, full path 540, reactivation instruction 550 and file data 560 of "update image 48 ⇒ 49" are added to lines including sets of operation 530, full path 540, reactivation instruction 550 and file data 560 of "update image 47 ⇒ 48". Similarly, lines including sets of operation 530, full path 540, reactivation instruction 550 and file data 560 of "update image 49 ⇒ 50" are added. Then, the new version number 520 is rewritten to "50".

Next, the CPU 131 updates the update image cache data (step S1150). More specifically, lines with the smallest number of accesses 720 in the update image cache data are deleted, and instead, the update image created at step S1140 is added. For example, "47 ⇒ 50" is stored as an update classification 710, "1" is stored as the number of accesses 720, and the created update image is stored as update image data 730.

Then, the CPU 131 distributes the update image created at step S 1140 to the apparatus 160 via the network interface 133.

### <Update application process>

Figure 12 is a flowchart for describing the process of the update application program 340 in the apparatus 160. Here, the subject of the operation of each step is the CPU 161 unless otherwise specified. That is, the CPU 161 develops the update application program 340 in the RAM 162 and executes each step in the program.

First, the CPU 161 transmits an update request to the update creation/distribution server 130 (step S1210). In the update request, the version number 320 is included.

Then, the CPU 161 receives an update image from the update creation/distribution server 130 (step S1220). The update image received here was created by executing the update distribution function 280.

Next, the CPU 161 updates the firmware image 310 using the received update image (step S 1230). For example, if an update image as in Figure 5 is received, the firmware image is updated in accordance with operations 530 on the lines 571 to 573. That is, the data of /usr/sbin/httpd is rewritten with the corresponding file data 560, the data of /lib/libfoo.so.1 is deleted, and the data of /usr/sbin/named is created with the contents of the corresponding file data 560. The version number 320 is updated to the version number shown as the new version number 520.

Next, the CPU 161 performs a reactivation process in accordance with a reactivation instruction 550 (step S1240). In the example in Figure 5, the httpd service is reactivated.

### <Conclusion>

Through the above process, update or firmware can be realized. To summarize the process of the whole system, the developer 110 transmits the newest firmware image 120 to the update creation/distribution server 130 first. The apparatus 160 transmits a firmware update request to the update creation/distribution server 130 using the update application program 340. The update creation/distribution server 130 creates an update image 140 using the update creation function 260 and transmits the update image 140 to the apparatus 160. The apparatus 160 receives the update image 140 and updates the firmware to be the newest using the update application program 340.

By applying the embodiment of the present invention described above, the time required for updating the firmware can be shorter than the case of replacing all the firmware because only files included in an update image 140 are updated when the firmware is updated. Furthermore, since the update image 140 is automatically created only by the developer 110 sending a firmware image 120 to the update creation/distribution server 130, the burden on the developer 110 is reduced.

As an additional advantage, the area for storing update images is reduced. For example, if the newest version of the firmware is 50, only 49 kinds of update images, that is, update 1 ⇒ 50, update 2 ⇒ 50, update 3 ⇒ 50, update 4 ⇒ 50, ..., update 49 ⇒ 50 are required, and it is not required to store all the pairs. Since the update 1 ⇒ 50 includes difference corresponding to 49 versions, and update 2 ⇒ 50 includes difference corresponding to 48 versions, a large size is required. Instead of storing these, 49 differences, each of which corresponds to one version", are stored as shown as the update images 221, and therefore, the area for storing the update images can be small.

The present invention can be realized by a program code of software realizing the functions of the embodiment. In this case, a storage medium in which the program code is recorded is provided for a system or an apparatus, and a computer (or a CPU or an MPU) of the system or the apparatus reads the program code stored in the recording medium. In this case, the program code itself read from the recording medium realizes the functions of the embodiment described before, and the program code itself and the recording medium in which the program code is stored constitute the present invention. As the recording medium for providing such a program code, for example, a flexible disk, CD-ROM, DVD-ROM, hard disk, optical disk, magneto-optical disk, CD-R, magnetic tape, nonvolatile memory card, ROM or the like is used.

It is also possible for an OS (operating system) or the like operating on a computer to perform a part or all of the actual processing on the basis of instructions of the program code so that the functions of the embodiment described before are realized by the processing. Furthermore, it is also possible for the CPU or the like of a computer to perform, after the program code read from the storage medium is written into the memory on the computer, a part or all of the actual processing on the basis of instructions of the program code so that the functions of the embodiment described before are realized by the processing.

Furthermore, it is also possible to, by distribution of the program code of the software realizing the functions of the embodiment via a network, store it into storage means, such as a hard disk and a memory of a system or an apparatus, or a storage medium, such as a CD-RW and CD-R, and for a computer (or a CPU or an MPU) of the system or the apparatus to read and execute the program code stored in the storage means or the storage medium when the program code is used.

### Description of Symbols

- 110: developer
- 120: firmware image
- 130: update creation/distribution server
- 140: update image
- 150: network
- 160: apparatus
- 131: CPU
- 132: RAM
- 133: network interface
- 134: HDD
- 135: old-version firmware image
- 161: CPU
- 162: RAM
- 163: network interface
- 164: flash memory

## Claims

1. A firmware update system which updates the image of firmware including software for an apparatus and the configuration data thereof, the system comprising:
an apparatus which operates on the firmware, and an update image generation/distribution server which generates an update image for updating the firmware and transmits the update image to the apparatus; wherein
the update image generation/distribution server comprises an update image generation section which generates an update image which is data required for updating a firmware image of the version being used by the apparatus (a first firmware image) to a firmware image of a new version (a second firmware image), and a data communication section which transmits the update image to the apparatus; and
the apparatus updates the firmware image of the version being used on the basis of the update image.

2. The firmware, update system according to claim 1, wherein
the update image generation/distribution server further comprises an update image storage section which stores update images each of which is for two consecutive versions, which are update images each of which is for two consecutive versions between the oldest-version firmware image and the newest-version firmware image; and
the update image generation section acquires data required for updating the first firmware image to the second firmware image, from the update image storage section to generate the update image.

3. The firmware update system according to claim 2, wherein
if an update image for two consecutive versions directly corresponding to an update from the first firmware image to the second firmware image exists in the update image storage section, the update image generation section sets the update image for the two consecutive versions as the update image; and
if the update image for the two consecutive versions directly corresponding to the update from the first firmware image to the second firmware image does not exist in the update image storage section, the update image generation section generates the update image by acquiring and merging all of update images each of which is for two consecutive versions and which are required for updating the first firmware image to the second firmware image.

4. The firmware update system according to claim 3, wherein the update image generation/distribution server further comprises an update image cache section which stores a predetermined number of update images with high use frequency.

5. The firmware update system according to claim 1, wherein
the update image generation/distribution server further comprises a reactivation instruction DB which stores information indicating which file update requires which service reactivation; and
the update image generation section refers to the reactivation instruction DB to insert a service reactivation instruction into the update image to be transmitted.

6. The firmware update system according to claim 5, wherein
the reactivation instruction DB stores information indicating necessity of service reactivation in association with a library used by the file; and
the update image generation section further inserts an instruction to reactivate a service corresponding to the library, into the update image to be transmitted.

7. An update image generation/distribution server apparatus which operates in a firmware update system which updates the image of firmware including software for an apparatus and the configuration data thereof, generates an update image for updating the firmware, and transmits the update image to the apparatus, the server apparatus comprising:
an update image generation section which generates an update image which is data required for updating a firmware image of the version being used by the apparatus (a first firmware image) to a firmware image of a new version (a second firmware image); and
a data communication section which transmits the update image to the apparatus using the firmware.

8. The update image generation/distribution server apparatus according to claim 7, comprising:
an update image storage section which stores update images each of which is for two consecutive versions, which are update images each of which is for two consecutive versions between the oldest-version firmware image and the newest-version firmware image; wherein
the update image generation section acquires data required for updating the first firmware image to the second firmware image, from the update image storage section to generate the update image.

9. The update image generation/distribution server apparatus according to claim 8, wherein
if an update image for two consecutive versions directly corresponding to an update from the first firmware image to the second firmware image exists in the update image storage section, the update image generation section sets the update image for the two consecutive versions as the update image; and
if the update image for the two consecutive versions directly corresponding to the update from the first firmware image to the second firmware image does not exist in the update image storage section, the update image generation section generates the update image by acquiring and merging all of update images each of which is for two consecutive versions and which are required for updating the first firmware image to the second firmware image.

10. The update image generation/distribution server apparatus according to claim 9, further comprising an update image cache section which stores a predetermined number of update images with high use frequency.

11. The update image generation/distribution server apparatus according to claim 7, further comprising a reactivation instruction DB which stores information indicating which file update requires which service reactivation; wherein
the update image generation section refers to the reactivation instruction DB to insert a service reactivation instruction into the update image to be transmitted.

12. The update image generation/distribution server apparatus according to claim 11, wherein
the reactivation instruction DB stores information indicating necessity of service reactivation in association with a library used by the file; and
the update image generation section further inserts an instruction to reactivate a service corresponding to the library, into the update image to be transmitted.
